# EUROPEAN PATENT APPLICATION

(11) **EP 4 173 474 A1**
(43) Date of publication of application: **03.05.2023**
(21) Application number: 21861115.0
(22) Date of filing: 29.07.2021
(51) Int. Cl.: A01G 7/00

(54) **PLANT DIMENSION MEASURING TOOL AND PLANT DIMENSION MEASURING METHOD**

(30) Priority: 27.08.2020 JP 2020143283
(71) Applicant: OMRON Corporation, Kyoto 600-8530 (JP)
(72) Inventor: ZENG, Xiangyu, Kyoto-shi, Kyoto 600-8530 (JP)
(74) Representative: Isarpatent
(86) International application number: PCT/JP2021/028179
(87) International publication number: WO 2022/044687

(57) **Abstract**

To measure a dimension of a plant efficiently with high accuracy, a tool for measuring a dimension of a plant is placed behind the plant when an image of the plant is captured. The tool for measuring a dimension of a plant includes a background portion including a mark as a positional reference for a growth point of the plant in capturing an image of a predetermined dimensional measurement point of a stem of the plant with an imager, and a dimensional reference portion including a dimensional reference in the captured image. The background portion includes a vertical portion with a horizontal width of 3 to 20 cm inclusive to extend vertically when placed behind the plant.

## Description

### TECHNICAL FIELD

The present invention relates to a tool for measuring a dimension of a plant and a method for measuring a dimension of a plant.

### BACKGROUND

An example known method for measuring a dimension of a plant uses a measurement tool such as a tape measure or a caliper placed in contact with a plant stem to measure the diameter of the plant stem. However, such contact with the plant during measurement may negatively affect the vegetative growth of the plant. Further, to measure the diameter of the plant stem at a branching portion of the plant, the branching portion can obstruct placement of the measurement tool into contact with the plant.

Another example measurement method for plants may be a system that captures an image of a target plant from above with an imager and measures the characteristics of the plant stem through image analysis (refer to, for example, Patent Literature 1). Such image analysis allows simple and highly accurate measurement of a plant with little contact with the plant.

A method for measuring a dimension of a plant using image analysis may use a white background plate including black markers placed behind the plant when an image of the plant is captured as an example tool for measuring a dimension of a plant. However, placing the plant stem in close contact with the white background plate is actually difficult when the plant is three-dimensional and has branches and leaves, thus causing a measurement error resulting from the distance between the plant stem and the white background plate.

### Related Art Documents

### Patent Documents

Patent Literature 1: Japanese Unexamined Patent Application Publication No. 2017-104037

### SUMMARY

### TECHNICAL PROBLEM

With the measurement method described above, the white background plate may be placed behind the plant to evaluate the degree of vegetative growth of the plant, and a digital camera or another imager may be used to capture an image of the plant stem. The diameter of the plant stem may then be measured using a predetermined image analysis program. Although the plant stem and the background plate are actually at a distance from each other, this method yields a value for the plant stem that is hypothetically in close contact with the white background plate. The measurement value of the plant stem diameter using the image analysis program can thus often exceed the true value. Further, measuring the distance between the plant stem and the white background plate using the image analysis program is difficult.

In response to a measurement error described above, one or more aspects of the present invention are directed to an improved tool for measuring a dimension of a plant used for capturing an image of a plant stem and an improved method for measuring a dimension of a plant in analysis with an image analysis program to reduce an error in the measurement value of the diameter of the plant stem. The vegetative growth of the plant is to be managed based on the measurement value of the diameter of the plant stem measured with high reliability.

The tool according to the above aspects of the present invention may be used for applications other than measuring the diameter of the plant stem. The method for measuring a dimension of a plant according to the above aspects of the present invention may use a parameter to be measured other than the diameter of the plant stem.

### SOLUTION TO PROBLEM

A tool according to an aspect of the present invention is a tool for measuring a dimension of a plant. The tool is a plate for measuring the dimension of the plant at a predetermined dimensional measurement point of a stem of the plant with an image of the dimensional measurement point captured with an imager. The tool includes a background portion and a dimensional reference portion. The background portion is to be placed behind the stem of the plant in capturing an image of the dimensional measurement point to define an outer edge of the stem. The background portion includes a mark as a positional reference for a growth point of the plant in capturing the image. The dimensional reference portion is joined to the background portion. The dimensional reference portion includes a dimensional reference in the captured image. The background portion includes a vertical portion with a horizontal width of 3 to 20 cm inclusive to extend vertically when placed behind the plant. In the above aspect of the present invention, the shape of the background portion can be used to easily detect the outer edge of the plant stem in the image analysis to remove the background that affects the measurement of the diameter of the plant stem. Further, the mark on the background portion as the positional reference for the plant growth point facilitates positioning on the background portion behind the plant stem in an imaging operation.

In the above aspect of the present invention, the background portion may be longitudinally rectangular to extend vertically when placed behind the plant. The dimensional reference portion may be laterally rectangular to extend horizontally in two directions from a lower end of the background portion when placed behind the plant. The dimensional reference may include a plurality of markers at a predetermined distance from one another. The plurality of markers may be located at two ends of the dimensional reference portion. Compared with a tool for measuring a dimension of a plant having a rectangular surface, the tool for measuring a dimension of a plant having the above shape has fewer contact points with the plant when the plant growth point is three-dimensional and has branches and leaves. Further, the tool can detect the dimensional measurement point of the plant with high accuracy and calculate the dimension at the dimensional measurement point with high accuracy. In the above aspect of the present invention, the distance between the plurality of markers may be, for example, 30 cm.

In the above aspect of the present invention, the background portion may include a plurality of indicators for a measurement point of a dimension of the stem at a plurality of predetermined points vertically below the mark when placed behind the plant. This allows a measurer to easily determine the position of the growth point in capturing an image of the plant with the imager. This also allows the measurer to easily determine the position of the plant stem to be the dimensional measurement point from the growth point. In the above aspect of the present invention, the plurality of indicators may be located in a range of up to, for example, 30 cm below the mark indicating the positional reference of the growth point.

A method according to another aspect of the present invention is a method for measuring a dimension of a plant. The method includes capturing an image of a predetermined dimensional measurement point of a stem of the plant with an imager, and analyzing the captured image to measure a dimension of the dimensional measurement point. The capturing the image of the dimensional measurement point includes placing a background plate behind the stem of the plant to define an outer edge of the stem of the plant, positioning the stem of the plant by aligning a growth point of the plant with a positional reference for the growth point of the plant included in the background plate, and obtaining the dimension of the dimensional measurement point in the captured image of the dimensional measurement point of the stem of the plant and the background plate based on a dimensional reference included in the background plate.

In the above aspect of the present invention, placing the background plate behind the plant stem in an imaging operation allows highly accurate calculation of a dimension of a plant at a predetermined dimensional measurement point with substantially no error in the position of the dimensional measurement point of the plant stem in image analysis.

In the above aspect of the present invention, a portion of the background plate placed behind the dimensional measurement point may have a horizontal width of 3 to 20 cm inclusive. This allows the measurer to clearly determine the plant stem in image analysis.

In the above aspect of the present invention, the dimensional reference may include a plurality of markers at a predetermined distance from one another. The plurality of markers may be located with the stem of the plant in between on the background plate in capturing the image of the dimensional measurement point. This allows the dimension of the plant at the dimensional measurement point to be calculated based on the distance between the plurality of markers in the image analysis.

The method according to the above aspect of the present invention may further include calculating the dimension of the stem of the plant at the dimensional measurement point by obtaining an approximate curve of a relationship between a dimension at a plurality of points along the stem above and below the stem and lengths from the growth point at the plurality of points. This structure increases the reliability of the dimensional value obtained using the approximate curve of the relationship between the length from the growth point and the dimension. In the above aspect of the present invention, the predetermined length may be, for example, 20 cm.

In the above aspect of the present invention, the background plate may include a plurality of predetermined indicators at positions corresponding to the plurality of points vertically below a mark on the background plate. The method may further include obtaining the dimension at the plurality of points in the captured image of the dimensional measurement point of the stem of the plant and the background plate by determining positions of the plurality of points using the plurality of indicators. This allows the measurer to determine an approximate position of the dimensional measurement point of the plant stem using the predetermined indicators on the background plate.

### ADVANTAGEOUS EFFECTS

In the above aspects of the present invention, the dimension of the plant can be efficiently measured with high accuracy to more accurately manage plant cultivation based on the obtained dimensional value. For measuring the diameter of the plant stem, for example, the obtained value can be used to more accurately determine whether the plant has an appropriate level of the vegetative growth for more accurate adjustment of the amounts of water and fertilizer.

### BRIEF DESCRIPTION OF THE DRAWINGS

FIG. 1 is a schematic diagram of an imaging operation of a plant stem with an imager.
FIG. 2 is a schematic diagram of a background plate having a T shape reversed upside down, showing its surface features.
FIG. 3A and FIG. 3B are schematic diagrams of a method for measuring a diameter of the plant stem using an image analysis program after an imaging operation.
FIG. 4A and FIG. 4B are schematic diagrams of background plates in a modification.
FIG. 5A to FIG. 5G are schematic diagrams of background plates each having a shape applicable in the present embodiment.

### DETAILED DESCRIPTION

[Example Use] In the example use, a background plate as an example tool for measuring a dimension of a plant having a T shape reversed upside down, and a method for measuring a dimension of a plant using the background plate will be described. In measuring the diameter of a plant stem, markers at a predetermined distance from one another are located on the background plate to provide more accurate information on the position coordinates of a dimensional measurement point. With the background plate placed behind the plant stem, an image of the plant stem and the background plate is captured, and the diameter of the plant stem in the image is calculated based on the distance between the markers on the background plate in analyzing the captured image.

In analyzing the captured image using an image analysis program, an upper end of the plant stem is used as the growth point of the target plant, and the diameter of the plant stem is measured at multiple points along the plant stem. The formula for the approximate curve can be obtained from data at the multiple points and can be used to determine the diameter of the stem at, for example, 20 cm below the growth point.

[First Embodiment] A tool for measuring a dimension of a plant according to a first embodiment of the present invention will be described in detail with reference to the drawings. Hereafter, the tool for measuring a dimension of a plant is basically the background plate. The measurement of the diameter of the plant stem is described below as the embodiment of the measurement using the tool for measuring a dimension of a plant. The tool described below is a mere example of the tool for measuring a dimension of a plant according to an embodiment of the present invention, and is not limited to the dimensional measurement target or the dimensional measurement procedure described below.

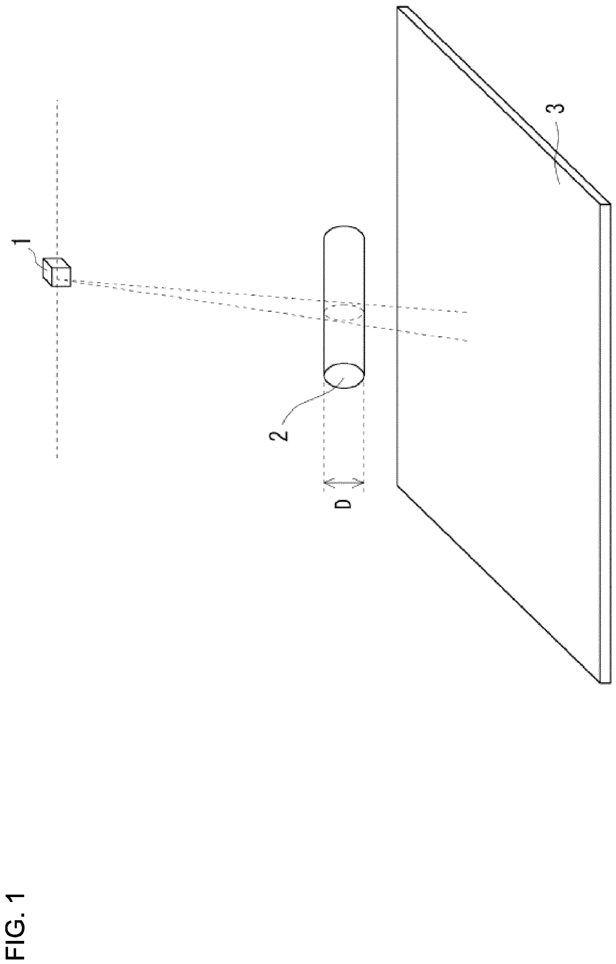

<Dimensional Measurement Method> FIG. 1 is a schematic diagram of an imaging operation of a plant stem 2 with an imager 1. For example, the imager 1 may typically be a digital camera. In FIG. 1, a known background plate 3 having a rectangular surface is placed behind the plant, and an image of the plant stem 2 is captured with the imager 1. In image analysis, a measurement point is identified, and the diameter of the identified portion is measured. Although the background plate 3 is typically white, the background plate 3 may have a color hue different from the color hue of the plant stem 2 for differentiation from the plant stem 2. The width of the plant stem 2 is calculated based on a distance between markers 8 (described later) on the background plate 3, and the diameter is calculated using the width of the plant stem 2. In capturing an image of the plant stem 2, the plant stem 2 may be ideally in close contact with the background plate 3 behind the plant stem 2. However, the plant stem 2 and the background plate 3 are at a distance between them when the plant growth point is three-dimensional and has branches and leaves. The growth point of the plant herein refers to an actively dividing cellular portion at the tip of the plant stem.

As shown in FIG. 1, although the true value of the diameter of the plant stem 2 is D, the measurement value of the diameter of the plant stem 2 is greater than the true value for the plant stem 2 that is hypothetically in close contact with the background plate 3. Eliminating such a measurement error in measuring the diameter of the plant stem 2 is actually difficult with a known method using the rectangular background plate 3.

In measuring the diameter of the plant stem 2, the diameter of a portion at 20 cm below the plant growth point is specifically stable. The diameter measured at this position can be a reliable true value of the diameter of the plant stem 2. For the image captured with the imager 1 and analyzed using the image analysis program, the portion at 20 cm below the growth point (this portion is hereafter also referred to as a dimensional measurement point) may be determinable by the measurer. The background plate 3 includes measurement lines 6 (described later) used as scales to assist length measurement. In the present embodiment, the diameter of the plant stem 2 is measured at each predetermined length from the growth point during analysis, and the approximate curve is obtained from these values to determine the diameter of the dimensional measurement point at 20 cm below the growth point.

When the imager 1 is used to capture an image of the plant stem 2, the structure according to the present embodiment uses a background plate having a smaller area than the background plate 3 shown in FIG. 1 and having a T shape reversed upside down. Hereafter, the background plate having the T shape reversed upside down corresponds to the background plate 3 in FIG. 1 and will be simply referred to as the background plate 3.

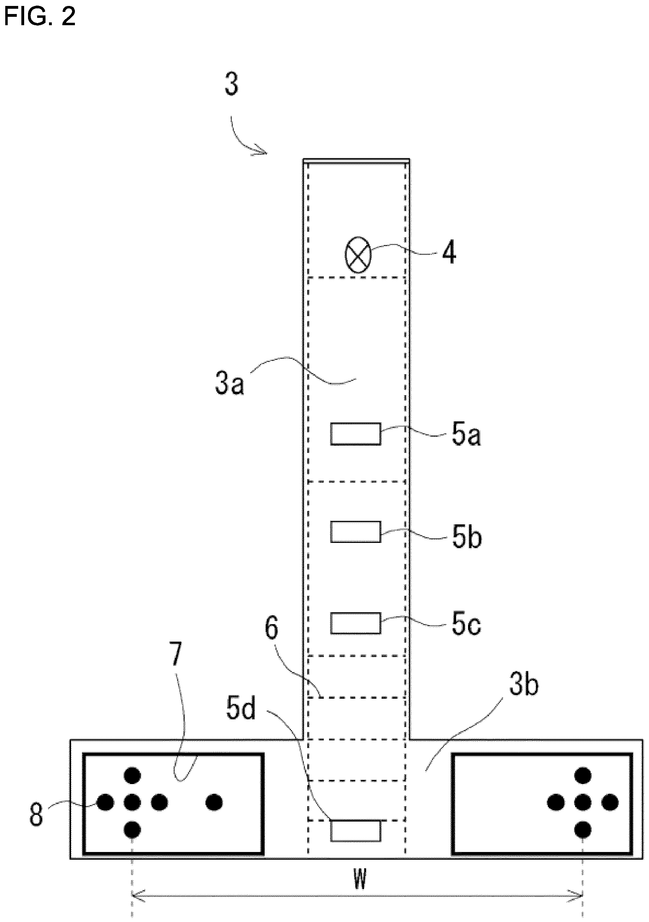

<Tool for Measuring Dimension> FIG. 2 is a schematic diagram of the background plate 3 having the T shape reversed upside down, showing its surface features. The background plate 3 includes a longitudinally elongated portion 3a and a laterally elongated portion 3b. As described above, the dimensional measurement of, for example, the diameter of the plant stem 2 is performed by placing the background plate 3 shown in FIG. 2 behind the plant, capturing the image with the imager 1, and analyzing the image after the imaging operation.

The longitudinally elongated portion 3a includes a growth point positional reference 4. In capturing an image of the plant stem 2, the position of the plant growth point is aligned with the growth point positional reference 4. The longitudinally elongated portion 3a includes measurement indicators 5a to 5d. The distances from the growth point positional reference 4 to the respective measurement indicators are 10 cm, 15 cm, 20 cm, and 30 cm. In analysis using the image analysis program, the position at 20 cm below the growth point is the dimensional measurement point of the plant stem 2. In capturing an image of the plant with the imager 1, the position of the measurement indicator 5c can be determined by the measurer to indicate the dimensional measurement point. The longitudinally elongated portion 3a corresponds to a background portion and a vertical portion in an aspect of the present invention. The longitudinally elongated portion 3a has a horizontal width from 3 to 20 cm inclusive in the direction shown in FIG. 2. The growth point positional reference 4 corresponds to a mark as a positional reference for the plant growth point in an aspect of the present invention. The measurement indicators 5a to 5d correspond to indicators in an aspect of the present invention.

The background plate 3 also includes measurement lines 6 that can be used to measure, for example, the width of plant leaves. The dotted lines on the background plate 3 shown in FIG. 2 that intersect vertically and laterally are all the measurement lines actually including scales to assist dimensional measurement that are not shown in FIG. 2. The plant for which an image is to be captured may not be located in the middle and may be at an angle for the imaging operation when the marker areas 7 are in the imaging range.

The laterally elongated portion 3b includes two marker areas 7 in the lower right and lower left in the direction shown in FIG. 2, and multiple markers 8 in each of the marker areas 7. The vertical direction of the background plate 3 in an imaging operation may be reversed upside down. The laterally elongated portion 3b and the markers 8 may be located near the upper end of the background plate 3 behind the plant in an imaging operation, or specifically, in the state shown in FIG. 2. The laterally elongated portion 3b corresponds to a dimensional reference portion in an aspect of the present invention. The markers 8 each correspond to a dimensional reference in an aspect of the present invention.

The captured image of the plant stem 2 with the background plate 3 placed behind the plant stem 2 includes the multiple markers 8 with predetermined reference position coordinates. The diameter of the plant stem 2 can be measured based on the number of pixels between the multiple markers 8 and the number of pixels in the width of the target plant stem 2. A distance W between the markers 8 in FIG. 2 is, for example, 30 cm. Each marker 8 is typically a solid circle. At least one marker 8 may be included in each of the two marker areas 7. In an imaging operation with the imager 1, the marker areas 7 are defined to be fully within the imaging range. In an imaging operation, the marker areas 7 are to avoid being shadowed.

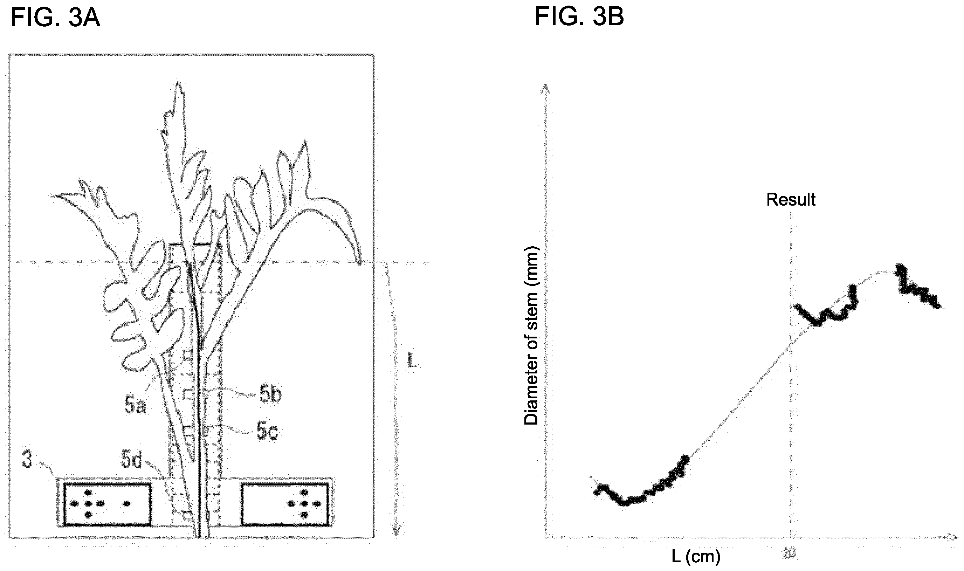

FIG. 3A and FIG. 3B are schematic diagrams of a method for measuring a diameter of the plant stem 2 using the image analysis program after the imaging operation. The image analysis program is prepared to calculate the diameter of the plant stem 2 at the dimensional measurement point using the image including the plant stem 2 and the background plate 3 captured with the imager 1. The image analysis program may be loaded into a common personal computer (PC) (not shown), be stored into a memory such as a read-only memory (ROM) included in the PC, and be executed by a central processing unit (CPU) included in the PC. For the imager 1 being a common digital camera, an image captured with the imager 1 is imported into the PC before being loaded and analyzed by the image analysis program. For the imager 1 being a smartphone or a tablet PC, for example, an image analysis program can also be loaded into the smartphone or the tablet PC for analyzing the image directly after the imaging operation. FIG. 3A is a schematic diagram of a captured image of the plant stem 2. With the image analysis program being executed, tracing from the upper end of the plant for which the image is captured downward in the direction of the plant stem 2 allows display of the traced trajectory on the image. The traced trajectory is indicated by a bold line in FIG. 3A. The starting point of the traced trajectory is the plant growth point. The measurement point for the diameter of the plant stem 2 is at 20 cm below the growth point.

In the image analysis program, the diameter of the stem is measured at multiple points in the above trajectory to calculate the diameter of the stem 2 at the dimensional measurement point. More specifically, the distance (the number of pixels) between the two edges of the stem in the horizontal direction of the multiple points in the above trajectory is determined based on the distance (the number of pixels) between the markers 8 on the background plate 3. The stem diameter at each of the multiple points is obtained by multiplying the obtained number of pixels by the pitch between the pixels.

In the analysis using the image analysis program, as shown in FIG. 3B, the diameter values of the stem in accordance with a value L at multiple points selected above and below the respective measurement indicators 5a to 5d shown in FIG. 3A are displayed as fragmented dots in the graph of the approximate curve. The approximate curve is then obtained from at displayed points, and the diameter values of the stem for every value L are displayed with the dots. Further, the diameter of the stem at L = 20 is calculated using the approximate curve as the measurement value of the diameter of the plant stem 2. This is because the stem diameter at the dimensional measurement point at 20 cm below the growth point is a more reliable measurement value of the stem diameter. Calculating the stem diameter at the dimensional measurement point at 20 cm below the growth point based on the data at the multiple points can thus yield a more reliable value. In this case, the measurement may not include the measurement at a position indicated by the measurement indicator 5c. For example, an approximate curve may be obtained at multiple points indicated by the measurement indicators 5b and 5d to calculate the stem diameter at L = 20. An approximate curve may also be obtained at other multiple points. The multiple points in this case may be selected to be above and below the dimensional measurement point at L = 20. This improve the calculation accuracy of the diameter calculation at L = 20. A quadratic function y = 2E-⁰⁸x⁴ - 2E⁻⁰⁵x³ + 0.006x² - 0.7284x + 35.473 can be used as the approximate curve in the present embodiment.

In an imaging operation, the plant stem 2 may be covered by branches or leaves of the plant. With the covered portion of the plant stem 2 not identified in the analysis, the plant stem 2 may be determined as being discontinuous. Any such discontinuous portion may be complemented with an additional straight line or an additional spline curve on the captured image. The image analysis thus identifies the plant stem 2 as being continuous.

In the present embodiment as described above, placing the background plate 3 in the first embodiment behind the plant stem 2 during an imaging operation facilitates detection of the edge of the plant stem 2 in image analysis and can also reduce a measurement error in the diameter of the plant stem 2 resulting from the distance between the plant stem 2 and the background plate 3. The method for measuring the diameter of the plant stem 2 using the tool for measuring a dimension of a plant in the present embodiment is not limited to the method described in FIG. 3. For example, the dimensional measurement point may be calculated directly using the measurement indicators 5a to 5d.

[First Modification] A first modification of the present invention will now be described. In the present modification, a background plate 3 having a shape other than the T shape reversed upside down is described for use as a tool for measuring the diameter of the plant stem 2. The background plate described in the present modification hereafter corresponds to the background plate 3 having the T shape reversed upside down and will be simply described as the background plate 3.

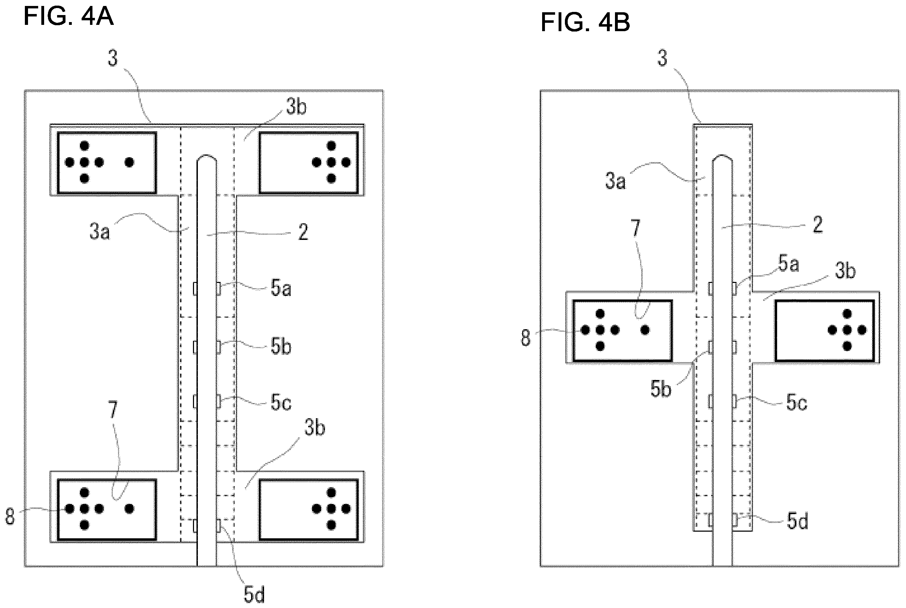

<Dimensional Measurement Tool> FIG. 4A and FIG. 4B are schematic diagrams of the background plates 3 in the modification. The plant is shown simply as the stem 2 without leaves and branches. The longitudinally and laterally elongated portions 3a and 3b are shown in FIG. 4A and FIG. 4B. An imaging screen viewed by the measurer in an imaging operation may include the measurement point at which the diameter of the plant stem 2 is to be measured with the measurement indicator 5 behind the plant as well as the marker areas 7. In this case, a tool for measuring a dimension may be, for example, the background plate 3 having the shape of a 90-degree rotated H shape as shown in FIG. 4A or the background plate 3 having the shape of a plus sign as shown in FIG. 4B. The marker areas 7 may be located at four positions as shown in FIG. 4A. The background plate 3 placed with the measurement indicators 5a to 5d behind the plant stem 2 in FIG. 4A and FIG. 4B may include the marker areas 7 located at two ends with the plant stem 2 in between, but may include the marker areas 7 located in line either horizontally or vertically at one end relative to the plant stem 2.

The shape of the background plate 3 and the positions of the marker areas 7 on the background plate 3 may be varied to allow selection of a background plate 3 that avoids any branches or leaves of the plant, which are not used in imaging, located in front of the markers 8 in an imaging operation. When, for example, the plant has branches and leaves located densely in the middle of the background plate 3, the background plate 3 with no marker areas 7 in the middle may be selected as shown in FIG. 4A. When, for example, the plant has branches and leaves densely located in an upper portion and a lower portion of the background plate 3, the background plate 3 having the marker areas 7 extending from the middle of the background plate 3 in the right and left directions may be selected as shown in FIG. 4B.

The method for measuring a dimension according to the present embodiment allows highly accurate measurement of the diameter of the plant stem 2 with little contact with the plant stem 2 except its contact for fixing the plant stem 2. In general, plants are to achieve an optimal growth balance in each stage of growth. Measuring the diameter of the plant stem 2 provides an indicator to manage the vegetative growth for the growth balance. In the above embodiments, the diameter of the plant stem is measured as the dimension of the plant stem. However, the radius or the width of the plant may also be used as the dimension to be measured. The approximate curve for calculating the diameter at the dimensional measurement point using the diameter values at multiple points in the image analysis program is not limited to the curve described above. The quadratic function may be replaced by a polynomial, an exponential function, a logarithmic function, a trigonometric function, a predetermined spline function, or any other function.

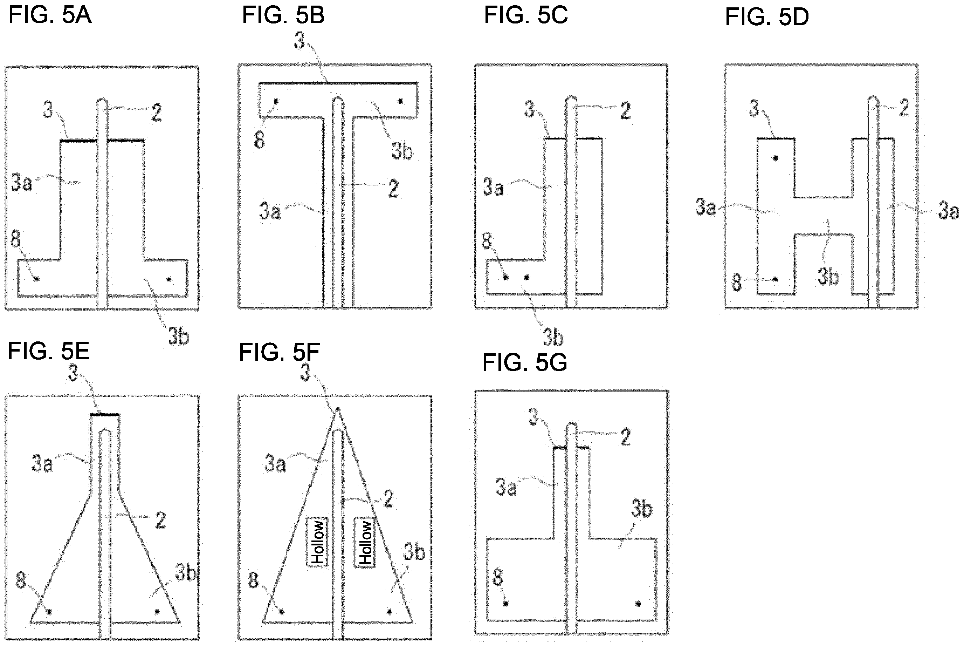

FIG. 5A to FIG. 5G are schematic diagrams of background plates 3 each having a shape applicable in the present embodiment. The plant is shown simply as the stem 2 without leaves and branches. The background plate 3 and the markers 8 on the background plate 3 are simplified in the figure. FIG. 5A shows a longitudinally elongated portion 3a located behind the stem 2 and joined to a laterally elongated portion 3b at the lower end. The background plate 3 in this example has a shape similar to the shape of the background plate 3 in the first embodiment, but includes the longitudinally elongated portion 3a with a wider horizontal width. The markers 8 are located on the right and left ends of the laterally elongated portion 3b. FIG. 5B shows a longitudinally elongated portion 3a located behind the stem 2 and joined to a laterally elongated portion 3b at the upper end. The markers 8 are located on the right and left ends of the laterally elongated portion 3b. FIG. 5C shows a longitudinally elongated portion 3a located behind the stem 2 and joined to a laterally elongated portion 3b at the left end. The markers 8 are located on the left end alone of the laterally elongated portion 3b. FIG. 5D shows longitudinally elongated portions 3a located behind and adjacent to the stem 2 and connected with a laterally elongated portion 3b. The markers 8 are located at the upper and lower ends of the longitudinally elongated portion 3a located adjacent to the stem 2. FIG. 5E shows a background plate 3 with a rectangle combined with a triangle at one vertex. The rectangle corresponds to a longitudinally elongated portion 3a. The triangle corresponds to a laterally elongated portion 3b. The longitudinally elongated portion 3a and the laterally elongated portion 3b are placed behind the stem 2. The markers 8 are located on the right and left ends of the laterally elongated portion 3b at positions at which the laterally elongated portion 3b is not joined to the longitudinally elongated portion 3a. FIG. 5F shows a background plate 3 having a triangular shape and two hollows. A longitudinal portion between the two hollows corresponds to a longitudinally elongated portion 3a, and a portion below the two hollows and other than the longitudinally elongated portion 3a corresponds to a laterally elongated portion 3b. The markers 8 are located on each of the two of the three vertices of the triangle that do not correspond to the longitudinally elongated portion 3a. FIG. 5G shows a background plate 3 with a shape similar to the shape of the background plate 3 in FIG. 5A, but including a longitudinally elongated portion 3a with a narrower horizontal width, and a laterally elongated portion 3b with a vertical distance longer than the background plate 3 in FIG. 5A. The longitudinally elongated portion 3a is placed behind the stem 2 and joined to the laterally elongated portion 3b at the lower end. The markers 8 are located on the right and left ends of the laterally elongated portion 3b.

The markers 8 may be ideally located at two ends with the plant stem 2 in between to serve as a reference for measuring the diameter of the plant stem 2. The stem 2 has the diameter in the horizontal direction. The markers 8 may thus be apart from each other to reduce an error.

The elements in the aspects of the present invention below are identified with reference numerals used in the drawings to show the correspondence between these elements and the components in the embodiments.

### Aspect 1

A tool for measuring a dimension of a plant, the tool being a plate for measuring the dimension of the plant at a predetermined dimensional measurement point of a stem (2) of the plant with an image of the dimensional measurement point captured with an imager (1), the tool comprising:
a background portion (3a) to be placed behind the stem of the plant in capturing an image of the dimensional measurement point to define an outer edge of the stem, the background portion (3a) including a mark (4) as a positional reference for a growth point of the plant in capturing the image; and
a dimensional reference portion (3b) joined to the background portion, the dimensional reference portion (3b) including a dimensional reference (8) in the captured image,
wherein the background portion includes a vertical portion (3a) with a horizontal width of 3 to 20 cm inclusive to extend vertically when placed behind the plant.

### REFERENCE SIGNS LIST

- 1: imager
- 2: plant stem
- 3: background plate
- 3a: longitudinally elongated portion
- 3b: laterally elongated portion
- 4: growth point positional reference
- 5a to 5d: measurement indicator
- 6: measurement line
- 7: marker area
- 8: marker

## Claims

1. A tool for measuring a dimension of a plant, the tool being a plate for measuring the dimension of the plant at a predetermined dimensional measurement point of a stem of the plant with an image of the dimensional measurement point captured with an imager, the tool comprising:
a background portion to be placed behind the stem of the plant in capturing an image of the dimensional measurement point to define an outer edge of the stem, the background portion including a mark as a positional reference for a growth point of the plant in capturing the image; and
a dimensional reference portion joined to the background portion, the dimensional reference portion including a dimensional reference in the captured image,
wherein the background portion includes a vertical portion with a horizontal width of 3 to 20 cm inclusive to extend vertically when placed behind the plant.

2. The tool according to claim 1, wherein
the background portion is longitudinally rectangular to extend vertically when placed behind the plant,
the dimensional reference portion is laterally rectangular to extend horizontally in two directions from a lower end of the background portion when placed behind the plant, and
the dimensional reference includes a plurality of markers at a predetermined distance from one another, and the plurality of markers are located at two ends of the dimensional reference portion.

3. The tool according to claim 1 or claim 2, wherein
the background portion includes a plurality of indicators for a measurement point of a dimension of the stem at a plurality of predetermined points vertically below the mark when placed behind the plant.

4. A method for measuring a dimension of a plant, the method comprising:
capturing an image of a predetermined dimensional measurement point of a stem of the plant with an imager; and
analyzing the captured image to measure a dimension of the dimensional measurement point,
wherein the capturing the image of the dimensional measurement point includes
placing a background plate behind the stem of the plant to define an outer edge of the stem of the plant,
positioning the stem of the plant by aligning a growth point of the plant with a positional reference for the growth point of the plant included in the background plate, and
obtaining the dimension of the dimensional measurement point in the captured image of the dimensional measurement point of the stem of the plant and the background plate based on a dimensional reference included in the background plate.

5. The method according to claim 4, wherein
a portion of the background plate placed behind the dimensional measurement point has a horizontal width of 3 to 20 cm inclusive.

6. The method according to claim 4 or claim 5, wherein
the dimensional reference includes a plurality of markers at a predetermined distance from one another, and the plurality of markers are to be located with the stem of the plant in between on the background plate in capturing the image of the dimensional measurement point.

7. The method according to any one of claims 4 to 6, further comprising:
calculating the dimension of the stem of the plant at the dimensional measurement point by obtaining an approximate curve of a relationship between a dimension at a plurality of points along the stem above and below the stem and lengths from the growth point at the plurality of points.

8. The method according to claim 7, wherein
the background plate includes a plurality of predetermined indicators at positions corresponding to the plurality of points vertically below a mark on the background plate, and
the method further comprises obtaining the dimension at the plurality of points in the captured image of the dimensional measurement point of the stem of the plant and the background plate by determining positions of the plurality of points using the plurality of indicators.
